# EUROPÄISCHE PATENTSCHRIFT

(11) **EP 1 083 336 B1**
(45) Veröffentlichungstag und Bekanntmachung des Hinweises auf die Patenterteilung: **26.05.2004**
(21) Anmeldenummer: 00116062.1
(22) Anmeldetag: 27.07.2000
(51) Int. Cl.: F04C 2/107, F04C 15/04, F04C 15/00, F16J 15/46

(54) **Exzenterschneckenpumpen-Anschlussvorrichtung**
Moineau pump and connection device
Pompe moineau et dispositif de connexion

(30) Priorität: 09.09.1999 DE 19943107
(43) Veröffentlichungstag der Anmeldung: 14.03.2001
(73) Patentinhaber: Netzsch Mohnopumpen GmbH, D-84478 Waldkraiburg (DE)
(72) Erfinder: Kirchner, Götz, 84544 Aschau/Inn (DE); Kneidl, Franz, 84478 Waldkraiburg (DE); Kreidl, Johann, 84478 Waldkraiburg (DE)

(56) Entgegenhaltungen:
- EP-A- 0 111 295
- EP-A- 0 155 755
- DE-A- 4 128 891
- DE-A- 19 530 979
- DE-U- 29 501 599
- US-A- 3 246 902
- US-A- 5 377 216

## Beschreibung

Die Erfindung betrifft eine Exzenterschneckenpumpen-Anschlußvorrichtung gemäß dem Oberbegriff des Patentanspruchs 1 und eine Exzenterschneckenpumpe mit einer derartigen Anschlußvorrichtung.

Eine Exzenterschneckenpumpe fördert mit Hilfe eines in einem Stator drehbaren Rotors. Sie weist keine sich öffnenden und schließenden Bauteile, wie beispielsweise Ventile, auf und kann daher besonders vorteilhaft zum Fördern von Flüssigkeit/Feststoff-Medien eingesetzt werden. Exzenterschneckenpumpen werden oft in Kombination mit einem Schneckenförderer angewendet, wobei ein Motor den Schneckenförderer antreibt und dieser seinerseits die Exzenterschneckenpumpe treibt. Eine solche Ausgestaltung wird beispielsweise zum Entleeren von Silos verwendet. Der Schneckenförderer ist dabei am Grund des Silos angeordnet und fördert das Medium, z.B. Schlamm, aus dem Silo zur Exzenterschneckenpumpe, die es anschließend in eine Rohrleitung pumpt.

Andere Anwendungsbeispiele, wie sie beispielsweise aus der DE-OS 1 653 903 bekannt sind, sehen ein der Exzenterschneckenpumpe vorgeschaltetes Rührwerk und einen ihr nachgeschalteten Schnekkenförderer vor.

Exzenterschneckenpumpen werden demnach oft mit anderen Aggregaten in Reihe geschaltet. Der Rotor der Exzenterschneckenpumpe ist dabei an seiner Antriebs- und/oder Abtriebsseite mit einer Welle eines benachbarten Aggregats gekoppelt. Diese Welle kann beispielsweise eine Kardanwelle sein, die mit einer Schnecke verbunden ist. Der Stator der Exzenterschneckenpumpe ist dann mit einem Gehäuse des benachbarten Aggregats gekoppelt, im vorgenannten Beispiel dem Schneckengehäuse. Zwischen der Welle und dem Gehäuse des benachbarten Aggregats ist ein im Querschnitt ringförmiger Kanal gebildet, durch den das zu fördernde Medium strömt.

Der Rotor und der Stator einer Exzenterschneckenpumpe unterliegen Verschleiß und müssen daher gewartet und gegebenenfalls ausgetauscht werden. Dazu muß die Exzenterschneckenpumpe von dem benachbarten Aggregat, beispielsweise dem Schneckenförderer, getrennt werden.

Es besteht zunächst das Problem, daß die Kopplung des Rotors der Exzenterschneckenpumpe mit der Welle des benachbarten Aggregats einerseits leicht zu lösen und zu befestigen sein soll, andererseits aber hohe Drehmomente übertragen können muß.

Aus der DE-GM 295 01 598 ist eine steckbare Rotorverbindung bekannt, bei der ein mit dem Rotor verbundener Steckzapfen in eine Steckhülse an einer Welle eines benachbarten Aggregats steckbar und durch eine Standardverbindung, wie z.B. eine Paßfeder, kraftschlüssig gesichert ist. Zum Lösen dieser Verbindung sind besondere Werkzeuge erforderlich. Die beschriebene Verbindung ist eine im Maschinenbau übliche und aus der allgemeinen Fachliteratur, beispielsweise Dubbel, Handbuch des Maschinenbaus, 14. Auflage, Seite 403, Springer Verlag, 1981, bekannte Wellen-Naben-Verbindung.

Ein weiteres Problem besteht darin, daß aus dem Kanal zwischen der Welle und dem Gehäuse des Aggregats Medium austreten kann, sobald die Exzenterschneckenpumpe abgenommen wird. Der ringförmige Kanal zwischen Exzenterschneckenpumpe und benachbartem Aggregat muß daher vor dem Abnehmen der Exzenterschneckenpumpe verschlossen werden.

Aus der DE-GM 295 01 599 ist eine Abschiebervorrichtung für eine Exzenterschnecken-Rachenpumpe bekannt, bei der der ringförmige Kanal mittels zweier Schieber verschlossen werden kann, die durch seitlich an einem Schieberflansch angeordnete, sich gegenüberliegende Schlitze geschoben werden können. Jedes Schieberblech weist eine halbrunde Aussparung auf, mit der es sich an die in dem Kanal angeordnete Welle anlegt. Zum Entfernen der Schieberbleche werden letztere vollständig herausgezogen und die seitlichen Schlitze des Schieberflansches werden anschließend mittels Abdeckleisten verschlossen. Auch bei dieser bekannten Vorrichtung kann nach dem Entfernen der Abdeckleisten aus den dann offenen Schlitzen des Schieberflansches Medium austreten. Je nach dem zu fördernden Medium kann letzteres die Schlitze zudem so zusetzen, daß ein Einführen der Schieberbleche nicht mehr möglich ist.

Die US-A-3,246,902 betrifft eine Einrichtung zum Abdichten und Arretieren einer zentrisch umlaufenden Rührwelle, die sich in einem unter Druck stehenden Behälter, der mit chemischem Material gefüllt ist, befindet. Zwecks Ausbaus der in einem Gehäuse zwischen dem Antrieb und der Rührwelle befindlichen Lager-Dichtungseinheit wird die Rührwelle arretiert. Die dazu eingesetzte Einheit besteht aus einer Dichtungsscheibe und einer anschließenden koaxialen elastischen Membrane mit einem gleichmäßigen Abstand von 0,5 mm zur Rührwelle. Während des Austauschens der Lager-Dichtungseinheit schließt die Membrane den annähernd 0,5 mm weiten Spalt und arretiert somit die Rührwelle.

Eine Gelenkabdichtung für Exzenterschneckenpumpen geht aus der DE 195 30 979 A1 hervor. Hierbei wird eine Antriebswelle über ein Gelenk mit dem exzentrisch rotierenden Rotorkopf verbunden. Da das Gelenk während der Pumpphase ständig von mehr oder weniger viskosem Material umgeben ist, muß das Gelenk gegen das Eindringen von Material geschützt werden, um eine Zerstörung zu vermeiden. Hierzu sind der Gelenkkopf und die Gelenkstange mit einer elastischen Manschette verbunden. Die Manschettenenden schließen dabei die Gelenkstange und den Gelenkkopf dichtend ab. Zur Verstärkung des mit dem Gelenk verbundenen Stirnteils der Manschette weist diese einen einvulkanisierten Metallring auf.

Aus den Figuren 1 und 2 der EP 0 155 755 werden Schraubverbindungen zwischen einem Rotorkopf mit einem sogenannten Biegestab dargestellt. Den festen Sitz der Verbindungen zwischen den beiden Verbindungsteilen erreicht man hier indem beide Teile ein Gewinde mit geringer Steigung aufweisen, die ineinander verschraubt werden. Entweder von einer Konterverbindung oder durch einen Preßsitz sind die beiden Teile dann fixiert.

Eine Stegverbindung zwischen dem Antrieb und dem Rotor einer Exzenterschneckenpumpe zeigt die DE 4228891 A1. Dabei bildet eine Schlossemuß mit einer polygonförmigen Aufnahme für das Rotorkopfende und einer kraftschlüssigen Aufnahmegestaltung für das Antriebsmittel das Verbindungselement.

Die Erfindung hat die Aufgabe, eine verbesserte Exzenterschnekkenpumpen-Anschlußvorrichtung anzugeben, die einen einfachen Austausch des Rotors und/oder des Stators ermöglicht, ohne daß es zu einem erheblichen Austritt von zu förderndem Medium kommt.

Die Aufgabe ist erfindungsgemäß durch eine Exzenterschneckenpumpen-Anschlußvorrichtung gelöst, die die im Patentanspruch 1 genannten Merkmale aufweist.

Durch die im Inneren des Gehäuses der Anschlußvorrichtung erfindungsgemäße Anordnung des Schließelementes ist es möglich, den Kanal selbst dann sicher zu schließen, wenn das Medium darin unter hohem Druck steht. Zu einem Austritt des Mediums kann es aufgrund der nach außen geschlossenen Konstruktion nicht kommen.

Darüber hinaus kann das Schließelement nicht verloren, beschädigt oder mit Fremdstoffen verunreinigt werden. Ein Verschleppen von Fremdstoffen in das zu fördernde Medium ist besonders in der Lebensmittel- oder Pharmaindustrie eine besondere Gefahr.

Das Schließelement ist vorteilhaft in einer in der Wand des Kanals ausgebildeten, ringförmigen Vertiefung angeordnet, so daß der Kanalquerschnitt nicht verengt ist.

Eine vorteilhafte Weiterbildung sieht vor, daß sich das Schließelement auch an eine radial versetzte Welle so anpassen kann, daß es Dichtwirkung erzielt. So ist selbst dann ein dichter Verschluß durch das Schließelement gewährleistet, wenn die Welle im Kanal exzentrisch versetzt ist.

Eine vorteilhafte Gestaltung der Erfindung sieht vor, daß das Schließelement eine in ihrer radialen Abmessung veränderbare Dichtmanschette ist. Eine solche Dichtmanschette hat keine aneinander reibenden Bauteile, die verklemmen könnten. Sie wird daher bevorzugt beim Fördern eines Mediums aus Flüssigkeit und Feststoffen eingesetzt.

Die Dichtmanschette weist mit Vorteil eine elastische Wand auf, die einen Raum begrenzt, dem Hydraulikfluid unter Druck zugeführt und entnommen werden kann. Die Dichtmanschette ist dadurch einfach verschließbar und paßt sich zugleich der Lage der Welle genau an. Durch einen entsprechend hohen Druck des Hydraulikfluids kann eine besonders gute Abdichtung zwischen Dichtmanschette und Welle erzielt werden.

Ferner ist die Dichtmanschette vorteilhaft so weitergebildet, daß die elastische Wand in der Offenstellung an der Innenwand eines starren Hohlzylinders anliegt, ihre Ränder mit diesem fluiddicht verbunden sind und sie mit diesem im durch das Hydraulikfluid unter Druck gesetzten Zustand, d.h. in der Schließstellung, einen ringförmigen Raum begrenzt. Bei dieser Weiterbildung weist die Anschlußvorrichtung besonders wenig Bauteile auf und ist darüber hinaus sehr preiswert herstellbar. Die Dichtmanschette kann als separates Bauteil einfach in das Gehäuse bzw. den Kanal eingesetzt werden. Es ist allerdings besonders vorteilhaft, wenn der starre Hohlzylinder selbst einen Teil des Gehäuses bildet. Die Anschlußvorrichtung umfaßt dann im wesentlichen nur die Dichtmanschette, die unmittelbar an dem Aggregat befestigt ist.

Die letztgenannte Dichtmanschette kann besonders kostengünstig hergestellt sein, indem die Ränder der elastischen Wand an den starren Hohlzylinder vulkanisiert sind.

Die Dichtmanschette ist vorteilhaft ferner dadurch weitergebildet, daß die elastische Wand aus einem Material mit einer Härte von 40 bis 60 Shore A, insbesondere 50 Shore A besteht und/oder eine Wanddicke von 1 mm bis 3 mm, insbesondere 2 mm aufweist.

Eine alternative vorteilhafte Gestaltung der Erfindung sieht vor, daß das Schließelement wenigstens vier Schieber umfaßt, die radial in den Kanal bewegbar, insbesondere schwenkbar sind. Mittels der Schieber ist eine rein mechanische Lösung gestaltet, die besonders robust gestaltet sein kann. Ferner wird eine solche Lösung angewendet, wenn aufgrund äußerer Bedingungen, wie z.B. einer extrem niedrigen Temperatur, eine hydraulisch betätigte Anschlußvorrichtung versagen würde.

Die Welle der erfindungsgemäßen Anschlußvorrichtung ist besonders vorteilhaft mit Hilfe einer lösbaren Welle-Nabe-Verbindung mit dem Rotor einer Exzenterschneckenpumpe gekoppelt. Dabei können der Rotor und die Welle an ihren sich zugewandten Endbereichen je ein zu einander komplementäres Helixprofil aufweisen, wobei die Helixprofile ineinander schraubbar sind. Das Helixprofil am Endbereich des Rotors kann dem Helixprofil des restlichen Rotors entsprechen, so daß der Rotor für die Kopplung nicht weiter angepaßt werden muß.

Eine alternative Weiterbildung sieht vor, daß der Rotor und die Welle an ihren sich zugewandten Endbereichen je ein zueinander komplementäres Polygonprofil aufweisen, wobei die beiden Polygonprofile ineinander steckbar sind. Eine solche Kopplung kann ohne besondere Werkzeuge einfach gelöst und verbunden werden.

An dem dem Helix- bzw. Polygonprofil entgegengesetzten Ende des Rotors ist vorteilhaft ein Anschlag vorgesehen, der den Rotor gegen Herausschrauben bzw. Herausziehen bei einem Rückdrehen des antreibenden Aggregats sichert. Dieser Anschlag kann durch einen Querstift gebildet sein, der in einem den Rotor umgebebenden Endstutzen angebracht ist.

Ausführungsbeispiele der Erfindung werden nachfolgend anhand schematischer Zeichnungen erläutert. Es zeigt:
- Fig. 1: ein erstes Ausführungsbeispiel einer erfindungsgemäßen Exzenterschneckenpumpen-Anschlußvorrichtung im Längsschnitt,
- Fig. 2: ein zweites Ausführungsbeispiel einer erfindungsgemäßen Exzenterschneckenpumpen-Anschlußvorrichtung im Längsschnitt,
- Fig. 3: den Schnitt III-III in Fig. 2,
- Fig. 4: eine drittes Ausführungsbeispiel einer erfindungsgemäßen Exzenterschneckenpumpen-Anschlußvorrichtung im Längsschnitt IV-IV in Fig. 5, und
- Fig. 5: den Schnitt V-V in Fig. 4.

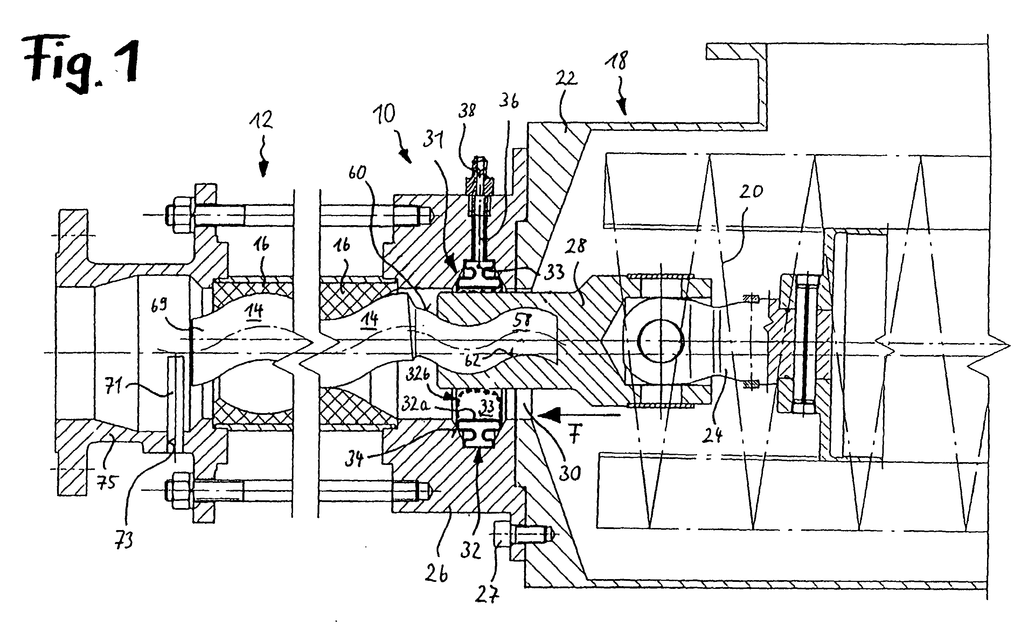

Die Fig. 1, 2 und 4 zeigen jeweils eine Exzenterschneckenpumpen-Anschlußvorrichtung 10, die am Ende einer nur teilweise dargestellten Exzenterschneckenpumpe 12 angeordnet ist. Die Exzenterschneckenpumpe 12 fördert ein nicht dargestelltes Medium mit Hilfe eines helixförmigen Rotors 14, der drehbar in einem Stator 16 angeordnet ist. Der Exzenterschneckenpumpe 12 ist ein teilweise dargestellter Schneckenförderer 18 vorgeschaltet, der eine mit dem Rotor 14 koaxiale Schnecke 20 (Fig. 1) aufweist, um die ein Schneckengehäuse 22 angeordnet ist. Die Schnecke 20 ist auf einer Kardanwelle 24 (Fig. 1) angeordnet, die durch einen nicht dargestellten Motor antreibbar ist. Die Kardanwelle (24) treibt ihrerseits den Rotor 14 an.

Die Anschlußvorrichtung 10 ist zwischen der Exzenterschneckenpumpe 12 und dem Schneckenförderer 18 angeordnet und dient zum Verbinden dieser beiden Aggregate. Hierzu weist die Anschlußvorrichtung 10 ein Gehäuse 26 auf, das zwischen dem Stator 16 und dem Schneckengehäuse 22 angeordnet ist. Das Gehäuse 26 ist in üblicher und daher nicht weiter erläuterter Weise an dem Schneckengehäuse 22 durch Schrauben 27 fluiddicht befestigt.

Durch das Gehäuse 22 erstreckt sich konzentrisch ein Kanal 30, in dem eine Welle 28 die Kardanwelle 24 mit dem Rotor 14 verbindet.

Die vom Motor in Drehung versetzte Schnecke 20 fördert das Medium in Richtung eines in Fig. 1, 2 und 4 dargestellten Pfeils F und treibt zugleich den Rotor 14. Wie bei Exzenterschneckenpumpen üblich, vollführt der Rotor 14, und damit auch die Welle 28, eine exzentrische Drehbewegung, d.h. die Welle 28 durchläuft bei ihrer Drehung die in Fig. 1 wiedergegebene Position nahe der oberen Begrenzung des Kanals 30 und ebenso eine nicht dargestellte, der unteren Begrenzung des Kanals 30 nahe Position.

Die Anschlußvorrichtung 10 dient des weiteren zum Verschließen des Kanals 30, damit die Exzenterschneckenpumpe 10, beispielsweise zum Austauschen des Rotors 14, abgenommen werden kann, ohne das Medium aus dem Kanal 30 in erheblichem Umfang austritt. Hierzu kann der Rotor 14 von der Welle 28 getrennt werden. Ferner ist im Gehäuse 26 ein allgemein mit 31 bezeichnetes Schließelement vorgesehen, das nachfolgend näher beschrieben wird.

Fig. 1 stellt eine Ausführungsform dar, bei der das Schließelement 31 eine Dichtmanschette ist, die in einer im Kanal 30 ausgebildeten, ringförmigen Vertiefung 34 angeordnet ist. Die Dichtmanschette ist im wesentlichen durch eine elastische Wand 32 gebildet, die in Fig. 1 sowohl in gefalteter Stellung 32a als auch in entfalteter Stellung 32b dargestellt ist. Die elastische Wand 32 umschließt einen im wesentlichen geschlossen Raum 33, in den durch eine im Gehäuse 26 ausgebildete Durchgangsbohrung 36 Fluid eingebracht werden kann. Die Durchgangsbohrung 36 ist an der Außenseite des Gehäuses 26 durch ein manuell zu öffnendes Ventil 38 verschlossen.

Die elastische Wand 32 ist aus Material mit einer Härte von ungefähr 50 Shore A gebildet und weist eine Wanddicke von etwa 2 mm auf. Wird Fluid unter Druck in den Raum 33 eingebracht, so verformt sich die elastische Wand 32 und bewegt sich von der Stellung 32a in die Stellung 32b. Die Stellung 32a entspricht dabei der Offenstellung der Dichtmanschette, in der der Kanal 30 für Medium durchlässig ist. Die Stellung 32b entspricht der Schließstellung der Dichtmanschette; in dieser ist der Kanal 30 fluiddicht geschlossen, da die Wand 32 durch das eingebrachte Fluid mit Druck gegen die Welle 28 gepreßt wird. Die Wand 32 legt sich dabei elastisch derart an die Welle 28 an, daß sie bei jeder beliebigen exzentrischen Stellung der Welle 28 abdichtet.

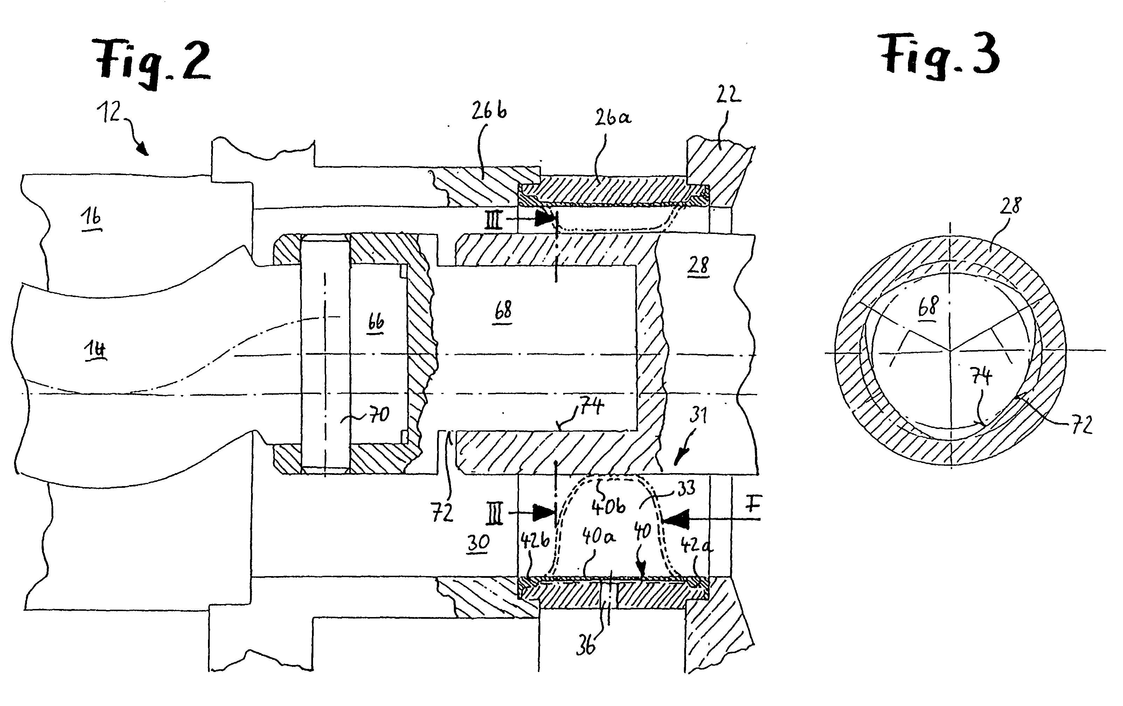

Fig. 2 zeigt eine Ausführungsform, bei der das Gehäuse einen starren Hohlzylinder 26a und einen daran axial anschließenden Gehäuseabschnitt 26b aufweist. Das Schließelement 31 dieser Ausführungsform ist eine Dichtmanschette, die im wesentlichen durch eine elastische Wand 40 gebildet ist, die in der Schließstellung innen am starren Hohlzylinder 26a anliegt. Die elastische Wand 40 ist an ihren Rändern 42a und 42b durch Vulkanisieren mit dem starren Hohlzylinder 26a fluiddicht verbunden, wobei zwischen den Rändern 42a und 42b ein Trennmittel auf den starren Hohlzylinder 26a aufgebracht ist, so daß beim Vulkanisieren die elastische Wand 40 in diesem Bereich nicht mit dem starren Hohlzylinder 26a verbunden wird.

Die Ränder 42a und 42b des elastischen Hohlzylinders 40 überlappen die Enden des starren Hohlzylinders 26a. Der starre Hohlzylinder 26a ist zwischen dem Stator 16 bzw. dem Gehäuseabschnitt 26b und dem Schneckengehäuse 22 eingespannt. Die Ränder 42a und 42b sind dabei zwischen dem Gehäuseabschnitt 26b und dem starren Hohlzylinder 26a bzw. zwischen diesem und dem Schneckengehäuse 22 zusammengepreßt. Die elastische Wand 40 dient mit ihren Rändern 42a und 42b dadurch gleichzeitig als zweimalige Dichtung zwischen dem Gehäuseabschnitt 26b, dem starren Hohlzylinder 26a und dem Schneckengehäuse 22. Die elastischen Ränder 42a und 42b können auch derart gestaltet und eingespannt sein, daß auf ein Vulkanisieren an dem starren Hohlzylinder 26a verzichtet werden kann.

Der starre Hohlzylinder 26a umschließt zusammen mit der elastischen Wand 40 den Raum 33, der wie oben beschrieben mit Hydraulikfluid gefüllt ist. Dadurch wird die elastische Wand 40 aus der in Fig. 2 dargestellten Offenstellung 40a in die ebenfalls dargestellte Schließstellung 40b überführt.

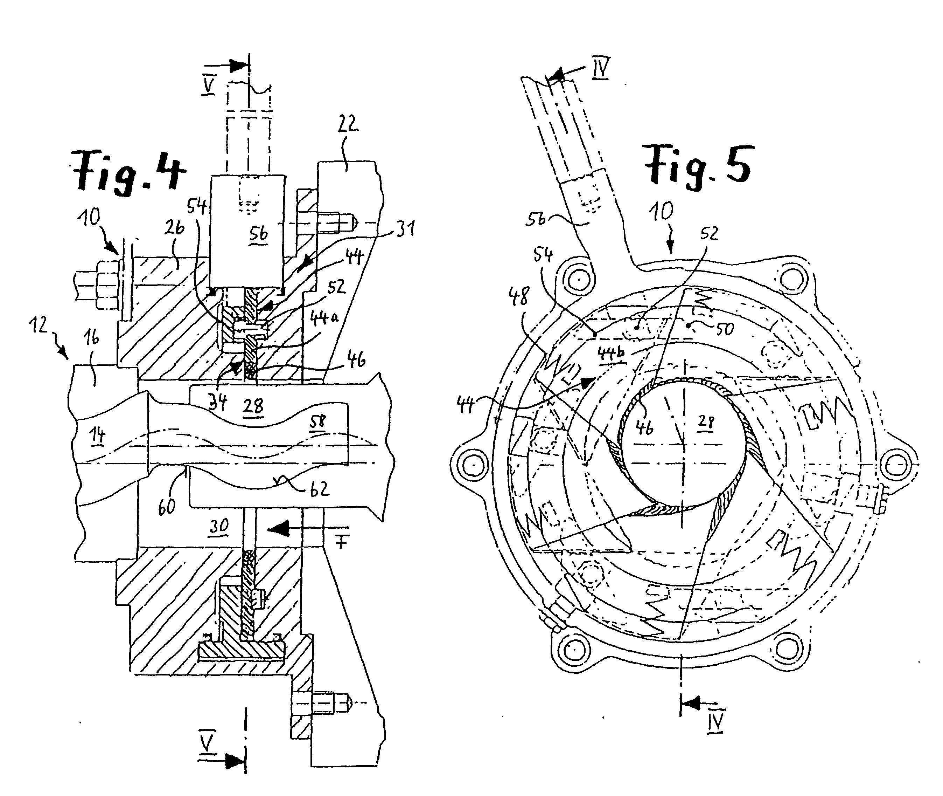

Fig. 4 und 5 stellen eine Ausführungsform dar, bei der das Schließelement 31 durch sechs Schieber gebildet ist, von denen nur einer mit Bezugszeichen 44 bezeichnet ist. Die Schieber 44 sind in Fig. 4 in der Offenstellung 44a dargestellt, in der sie von einer Vertiefung aufgenommen sind, die ähnlich der ringförmigen Vertiefung 34 in Fig. 1 gestaltet ist. Die Schieber 44 sind radial schwenkbar und weisen je an ihrer der Welle 28 zugewandten Seite einen elastischen Schieberbelag 46 auf. Beim Schließen der Schieber 44 kommen die Schieberbeläge 46 an der Welle 28 zum anliegen, verformen sich elastisch und dichten damit auch ab, wenn die Welle 28 radial versetzt ist.

Jeder Schieber 44 ist durch eine vereinfacht dargestellte Feder 48 radial vorgespannt und weist einen axial von ihm abstehenden Stift 52 auf, der in eine Kurvenbahn 50 ragt. Die Kurvenbahnen 50 aller Schieber 44 sind an der Stirnfläche eines Drehrings 54 angeordnet, der mit Hilfe eines Hebels 56 um die Drehachse des Rotors 14 drehbar ist. Zum Schließen wird der Drehring 54 gedreht, wobei sich die Stifte 52 und mit ihnen die Schieber 44 radial nach innen bewegen. Die Kurvenbahnen 50 geben die Schieber 44 dabei mindestens soweit frei, daß sie an der Welle anliegen. Die Federn 48 spannen die Schieber 44 vor und stellen eine dichte Schließstellung der Schieber 44 an der Welle 28 sicher.

Die in der Einleitung beschriebene Kopplung zwischen Rotor 14 und Welle 28 kann einfach als übliche, lösbare Wellen-Nabenverbindung gestaltet sein.

Fig. 1 und 4 stellen eine besonders einfache Ausführungsform dieser Kopplung dar. Dabei ist der der Welle 28 zugewandte Endabschnitt 58 des Rotors 14 in Fortsetzung des helixförmigen Profils des Rotors 14 mit einem Helixprofil 60 versehen. In dem dem Rotor 14 zugewandten Endabschnitt der Welle 28 ist ein diesem Helixprofil 60 komplementäres Helixprofil 62 ausgebildet. Die beiden Helixprofile 60 und 62 sind zum Koppeln des Rotors 14 mit der Welle 28 ineinander schraubbar.

Um sicherzustellen, daß der Rotor 14 bei einem Rückdrehen der Welle 28 sich nicht aus dieser herausschraubt bzw. herauszieht, ist an dem dem Helixprofil 60 entgegengesetzten Ende 69 des Rotors 14 ein Anschlag in Form eines Querstifts 71 vorgesehen (Fig. 1). Der Querstift ist in eine Bohrung 73 eingepreßt, die radial in einem Endstutzen 75 ausgebildet ist, der das Ende 69 umgibt.

In Fig. 2 und 3 ist eine Ausführungsform einer Verbindung von Rotor 14 und Welle 28 dargestellt, bei der am Endbereich 66 des Rotors 14 eine Zwischenwelle 68 aufgesteckt und mit Hilfe eines radial eingepreßten Stifts 70 befestigt ist. Die Zwischenwelle 68 stellt ein Wechselteil dar, mit dessen Hilfe Rotoren 14 unterschiedlichen Typs an eine Anschlußvorrichtung 10 anpaßbar sind. Die Zwischenwelle 68 weist ein der Welle 28 zugewandtes Polygonprofil 72 auf, das in Fig. 3 im Querschnitt dargestellt ist, in dem es eine im wesentlichen dreieckige Form mit gerundeten Ecken und Seiten aufweist. Die Welle 28 ist an ihrem der Zwischenwelle 68 zugewandten Endbereich mit einem komplementären Polygonprofil 74 versehen, so daß die Zwischenwelle 68 auf die Welle 28 aufsteckbar ist. Durch die gewählten Polygonprofile 72 und 74 kann die gesteckte Verbindung hohe Drehmomente übertragen und verklemmt dennoch nicht. Der Rotor 14 kann daher zusammen mit der Zwischenwelle 68 beim Abnehmen der Exzenterschneckenpumpe von der Anschlußvorrichtung 10 besonders einfach gelöst werden.

## Patentansprüche

1. Exzenterschneckenpumpen-Anschlußvorrichtung (10), mit einem Gehäuse (26; 26a, 26b), das von einem Kanal (30) durchsetzt ist, durch den während des Pumpenbetriebs Medium fließt, einer radial versetzten Welle (28), die in dem Kanal (30) so angeordnet ist, daß ein im wesentlichen ringförmiger Kanalquerschnitt gebildet ist, und mindestens einem Schließelement (31), das zum radialen Verschließen des Kanals (30) aus einer Offenstellung (32a; 40a; 44a) in eine Schließstellung (32b; 40b; 44b) überführbar ist,
**dadurch gekennzeichnet, daß**
das Schließelement (31) in seiner Offenstellung (32a; 40a; 44a) innerhalb des Gehäuses (26; 26a, 26b) angeordnet ist, von außen betätigbar ist und daß es sich der radial versetzten Welle (28) dichtend anpaßt.

2. Exzenterschneckenpumpen-Anschlußvorrichtung nach Anspruch 1,
**dadurch gekennzeichnet, daß**
das Schließelement (31) elastisch ist.

3. Exzenterschneckenpumpen-Anschlußvorrichtung nach Anspruch 1 oder 2,
**dadurch gekennzeichnet, daß** das Schließelement (31) eine in ihrer radialen Abmessung veränderbare Dichtmanschette (32; 40) ist.

4. Exzenterschneckenpumpen-Anschlußvorrichtung nach Anspruch 3,
**dadurch gekennzeichnet, daß** die Dichtmanschette eine elastische Wand (32; 40) aufweist, die einen Raum (33) begrenzt, dem Hydraulikfluid unter Druck zugeführt und entnommen werden kann.

5. Exzenterschneckenpumpen-Anschlußvorrichtung nach Anspruch 4,
**dadurch gekennzeichnet, daß** die elastische Wand (40) in der Offenstellung an der Innenwand eines starren Hohlzylinders (26a) anliegt, ihre Ränder (42a, 42b) mit diesem fluiddicht verbunden sind und sie mit diesem im durch das Hydraulikfluid unter Druck gesetzten Zustand (Schließstellung) einen ringförmigen Raum (33) begrenzt.

6. Exzenterschneckenpumpen-Anschlußvorrichtung nach Anspruch 5,
**dadurch gekennzeichnet, daß** die Ränder (42a, 42b) der elastischen Wand (40) an den starren Hohlzylinder (26a) vulkanisiert sind.

7. Exzenterschneckenpumpen-Anschlußvorrichtung nach Anspruch 4, 5 oder 6,
**dadurch gekennzeichnet, daß** die elastische Wand (40) aus einem Material mit einer Härte von 40 bis 60 Shore A, insbesondere 50 Shore A besteht und/oder eine Wanddicke von 1 mm bis 3 mm, insbesondere 2 mm aufweist.

8. Exzenterschneckenpumpen-Anschlußvorrichtung nach Anspruch 1 oder 2,
**dadurch gekennzeichnet, daß** das Schließelement wenigstens vier Schieber (44) umfaßt, die radial in den Kanal (30) bewegbar, insbesondere schwenkbar sind.

9. Exzenterschneckenpumpe mit einem Rotor (14),
**dadurch gekennzeichnet, daß** an einem axialen Endbereich (58; 68) des Rotors (14) eine Exzenterschneckenpumpen-Anschlußvorrichtung (10) nach einem oder mehrerer der vorhergehenden Ansprüche angeordnet ist.

10. Exzenterschneckenpumpe nach Anspruch 9,
**dadurch gekennzeichnet, daß** der Rotor (14) und die Welle (28) an ihren sich zugewandten Endbereichen (58; 28) je ein zueinander komplementäres Helixprofil (60; 62) aufweisen, wobei die Helixprofile (60; 62) ineinander schraubbar sind.

11. Exzenterschneckenpumpe nach Anspruch 9 oder 10,
**dadurch gekennzeichnet, daß** der Rotor (14) und die Welle (28) an ihren sich zugewandten Endbereichen (68; 28) je ein zueinander komplementäres Polygonprofil (72; 74) aufweisen, wobei die beiden Polygonprofile (72; 74) ineinander steckbar sind.

## Claims

1. Device (10) for connecting an eccentric screw-type pump, comprising a housing (26; 26a, 26b) through which a passage (30) passages, via which a medium flows during pump operation, as well as a radially offset shaft (28) disposed in said passage (30) so as to form a substantially annular cross-section of the passage, and at least one closure element (31) that is adapted to be changed over from an open position (32a; 40a; 44a) into a closed position (32b; 40b; 44b) for radially closing said passage (30),
**characterized in**
**that** said closure element (31) in its open position (32a; 40a; 44a) is disposed inside said housing (26; 26a, 26b), is adapted for operation from the outside, and adapts itself to said radially offset shaft (28) in a sealing relationship.

2. Device for connecting an eccentric screw-type pump according to Claim 1,
**characterized in**
**that** said closure element (31) is elastic.

3. Device for connecting an eccentric screw-type pump according to Claim 1 or 2,
**characterized in**
**that** said closure element (31) is a sealing cuff (32; 40) variable in terms of its radial dimension.

4. Device for connecting an eccentric screw-type pump according to Claim 3,
**characterized in**
**that** said sealing cuff presents a resilient wall (32; 40) defining a space (33) to which a pressurised hydraulic fluid may be supplied and from which the fluid may be discharged.

5. Device for connecting an eccentric screw-type pump according to Claim 4,
**characterized in**
**that** said resilient wall (40) in the open position bears against the inner wall of a rigid hollow cylinder (26a), that its edges (42a, 42b) are connected to said cylinder in a fluid-tight manner, and that it cooperates with the latter to define an annular space (33) in the condition pressurised by said hydraulic fluid (closed position).

6. Device for connecting an eccentric screw-type pump according to Claim 5,
**characterized in**
**that** the edges (42a, 42b) of said resilient wall are vulcanised to said rigid hollow cylinder (26a).

7. Device for connecting an eccentric screw-type pump according to Claim 4, 5 or 6,
**characterized in**
**that** said resilient wall consists of a material having a hardness of 40 to 60 Shore A, particularly 50 Shore A, and/or presents a wall thickness of 1 mm to 3 mm, particularly 2 mm.

8. Device for connecting an eccentric screw-type pump according to Claim 1 or 2,
**characterized in**
**that** said closure element comprises at least four gates (44) adapted to be radially moved, particularly pivoted, into said passage (30).

9. Eccentric screw-type pump comprising a rotor (14),
**characterized in**
**that** a device for connecting an eccentric screw-type pump (10) according to one or several of the preceding Claims is disposed on an axial terminal section (58; 68) of said rotor (14).

10. Eccentric screw-type pump according to Claim 9,
**characterized in**
**that** said rotor (14) and said shaft (28) present each a mutually complementary helical profile (60; 62) on their terminal sections (58; 28) facing each other, with said helical profiles (60; 62) being adapted to be screwed into each other.

11. Eccentric screw-type pump according to the Claims 9 and 10,
**characterized in**
**that** said rotor (14) and said shaft (28) present each a mutually complementary polygonal profile (72; 74) on their terminal sections (58; 28) facing each other, with said polygonal profiles (72; 74) being adapted to be plugged into each other.

## Revendications

1. Dispositif (10) à raccorder une pompe à vis sans fin excentrique, comprenant un carter (26; 26a, 26b), à travers lequel s'étend un passage (30), via lequel un milieu s'écoule au cours de la marche de la pompe, ainsi qu'un arbre (28) radialement décalé, disposé dans ledit passage (30) de façon à former une coupe transversale essentiellement annulaire du passage, et au moins un élément de fermeture (31) apte à être porté d'une position ouverte (32a; 40a; 44a) en une position fermée (32b; 40b; 44b) pour la fermeture radiale dudit passage (30),
**caractérisé en ce**
**que** ledit élément de fermeture (31), en sa position ouverte (32a; 40a; 44a), est disposé à l'intérieur dudit carter (26; 26a, 26b), est apte à être commandé de l'extérieur, et s'adapte audit arbre (28) radialement décalé d'une manière étanche.

2. Dispositif à raccorder une pompe à vis sans fin excentrique selon la revendication 1,
**caractérisé en ce**
**que** ledit élément de fermeture (31) est élastique.

3. Dispositif à raccorder une pompe à vis sans fin excentrique selon la revendication 1 ou 2,
**caractérisé en ce**
**que** ledit élément de fermeture (31) est une garniture cylindrique d'étanchéité (32; 40) variable en ses dimensions radiales.

4. Dispositif à raccorder une pompe à vis sans fin excentrique selon la revendication 3,
**caractérisé en ce**
**que** ladite garniture cylindrique d'étanchéité présente une paroi élastique (32; 40) définissant un espace (33) dans lequel on peut alimenter un fluide hydraulique sous pression et en dehors duquel on peut décharger le fluide.

5. Dispositif à raccorder une pompe à vis sans fin excentrique selon la revendication 4,
**caractérisé en ce**
**que** ladite paroi élastique (40), en la position ouverte, porte contre la paroi intérieure d'un cylindre creux rigide (26a), en ce que ses bords (42a, 42b) sont reliés audit cylindre de façon étanche aux fluides, et en ce qu'elle coopère avec le dernier en définissant un espace annulaire (33) en l'état mis sous pression par ledit fluide hydraulique (position fermée).

6. Dispositif à raccorder une pompe à vis sans fin excentrique selon la revendication 5,
**caractérisé en ce**
**que** les bords (42a, 42b) de ladite paroi élastique sont vulcanisés audit cylindre creux rigide (26a).

7. Dispositif à raccorder une pompe à vis sans fin excentrique selon la revendication 4, 5 ou 6,
**caractérisé en ce**
**que** ladite paroi élastique est faite d'un matériau d'une dureté de 40 à 60 Shore A, en particulier 50 Shore A, et ou présente une épaisseur de paroi de 1 mm à 3 mm, en particulier 2 mm.

8. Dispositif à raccorder une pompe à vis sans fin excentrique selon la revendication 1 ou 2,
**caractérisé en ce**
**que** ledit élément de fermeture comprend au moins quatre vannes d'arrêt (44) aptes à se mouvoir, en particulier pivoter, dans ledit passage (30).

9. Pompe à vis sans fin excentrique comprenant un (14),
**caractérisée en ce**
**qu'**un dispositif à raccorder une pompe à vis sans fin excentrique (10) selon une ou plusieurs des revendications précédentes est disposé à un secteur terminal axial (58; 68) dudit rotor (14).

10. Pompe à vis sans fin excentrique selon la revendication 9,
**caractérisée en ce**
**que** ledit rotor (14) et ledit arbre (28) présentent chacun un profil hélicoïdal (60 ; 62) réciproquement complémentaire à leurs secteurs terminaux (58; 28) l'un en face de l'autre, auxdits profils hélicoïdaux (60; 62) étant aptes à être vissé l'un dans l'autre.

11. Pompe à vis sans fin excentrique selon les revendications 9 et 10,
**caractérisée en ce**
**que** ledit rotor (14) et ledit arbre (28) présentent chacun un profil polygonal (60 ; 62) réciproquement complémentaire à leurs secteurs terminaux (58; 28) l'un en face de l'autre, auxdits profils polygonaux (60; 62) étant aptes à être enfiché l'un dans l'autre.
